# EUROPEAN PATENT SPECIFICATION

(11) **EP 0 722 921 B1**
(45) Date of publication and mention of the grant of the patent: **07.05.2003**
(21) Application number: 96100720.0
(22) Date of filing: 18.01.1996
(51) Int. Cl.: C05F 15/00, C05G 5/00, C05F 5/00, C05F 11/08, C05F 11/10, C05F 1/00

(54) **Liquid additive for enriching natural and chemical fertilizers**
Flüssiges Zusatzmedium zur Anreicherung von natürlichen und chemischen Düngemitteln
Additif liquide pour l'enrichissement des engrais naturels et chimiques

(30) Priority: 19.01.1995 IT BO950012
(43) Date of publication of application: 24.07.1996
(73) Proprietor: Faccini, Giuseppe, 44100 Ferrara (IT)
(72) Inventor: Faccini, Giuseppe, 44100 Ferrara (IT)
(74) Representative: Modiano, Guido, Dr.-Ing.

(56) References cited:
- AT-B- 395 847
- DE-A- 4 139 682
- PATENT ABSTRACTS OF JAPAN vol. 018, no. 632 (C-1280), 2 December 1994 & JP-A-06 240254 (YASUNORI OBARA), 30 August 1994,
- DATABASE WPI Section Ch, Week 8543 Derwent Publications Ltd., London, GB; Class C03, AN 85-265786 XP002010181 & JP-A-60 176 984 (UCHIMIZU M) , 11 September 1985

## Description

The present invention relates to a liquid additive for enriching natural and chemical fertilizers of any kind (biological and mineral, liquid, solid, and biocompost-based fertilizers).

Known from JP-A-60176984 is an organic fertilizer composition obtained by mixing metabolic products containing oxidation enzymes, which are produced by aerobic and/or facultative anaerobic bacteria, with organic mixtures present in waste water from food processing factories, etc. The metabolic products are found in sludges from biological treatment of organic solutions including waste water and precursors of humus. The process is such that microorganisms other than aerobic bacteria and facultative anaerobic bacteria in the block products are suppressed.

Known from EP-A-0 609 168 is a complex organic composition containing substances of natural origin which stimulates plant growth and protects plants from the aggression of pathogens. Such composition contains humic and fulvic acids as well as phenolic and polyphenolic acids of natural origin.

Natural organic conditioners for agricultural use are known which consist of humic extracts frequently obtained from peat by chemical methods: such conditioners, rich in humic and fulvic acids, are used increasingly owing to the extraordinary increase in effectiveness of the agricultural treatments performed in their presence, for example in leaf spraying, herbicidal treatments, wet dressing of seeds (i.e., in the application of manure or fertilizers to seeds), in hydroponics, or the like.

However, conventional conditioners, owing to their origin, are biologically inert, in that chemical extraction damages and reduces the above-mentioned active principles, and once they are spread on the soil they are consumed by the plants; accordingly, the humic acids become depleted due to consumption and the effectiveness of the product decreases in the course of time.

The technical aim of the present invention is to obviate the above-mentioned drawbacks of conventional additives, that is to say, to provide a liquid additive for enriching natural and chemical fertilizers that is biologically active over time, in the sense that the humus-forming process continues on the field after spraying, increasing the effectiveness in a quantitative sense and in terms of its duration.

Another aim of the present invention is to produce an additive starting from waste substances such as those from the agricultural and food industries, for example wastewaters from vegetable oil expression, dairy whey, and the like, the disposal of which would otherwise be rather costly. According to the present invention, such waste substances are converted into an additive for enriching fertilizers in general or such additive can be used by itself as a fertilizer.

Within the scope of this technical aim, an object of the present invention is to achieve the above aim with an additive that is natural as regards origin and production, relatively easy to produce in practice, safe in use, effective in use, and having a plant-treatment effectiveness besides having a relatively low cost.

This aim and these objects are all achieved by the present liquid composition for enriching natural and chemical fertilizers, said composition obtained by aerobic bacterial proliferation in wastewater containing organic matter, wherein said organic matter contains naturally present polyphenolic compounds and is derived from the crushing or pressing of vegetable substances, particularly olives, said composition containing active aerobic bacterial ferments and humic and fulvic acids, characterized in that said aerobic bacteria belong to autochthonous species, present in the amount of greater than 500 million bacteria per ml, which are normal to said vegetable substances and are naturally protected by said polyphenolic compounds, said composition containing said polyphenolic compounds which are present in said organic matter, said composition being capable of inhibiting the growth of pathogenic microorganisms. Such additive typically contains vitamins of the B group, amino acids, nucleic acids, and essential fatty acids. In the process for producing the additive according to the invention, the starting organic matter is partially converted to humic material by bacterial action. The B vitamins, which may be present in a high amount, and the amino acids, nucleic acids and essential fatty acids which may be present will vary according to the starting organic matter and the concentration of bacteria.

It is to be noted that the carbon content of the humic and fulvic acids, which have been produced through the conversion of organic matter in the starting wastewater streams, is preferably greater than 30% of the total organic carbon content of the product.

In the case of bacterial proliferation in organic liquids of partly animal origin (dairy whey mixed with wastewater derived from the processing of vegetables), the composition can vary in its individual components without losing the described effectiveness.

The additive according to the invention contains active ferments of high bacterial count (over 500 million bacteria (colony-forming units) per ml). In a pilot plant for the treatment of wastewater streams resulting from the processing of vegetables, the bacterial count has reached 2.5 billion bacteria per ml, and in the treatment of dairy whey has reached 4.7 billion bacteria per ml. The additive may have adenosine triphosphate possibly in a high amount, group B vitamins typically in a high amount, amino acids, nucleic acids, essential fatty acids, and so forth.

Typically, in a plant operation, the bacterial count is greater than 1.5 billion bacteria per ml in the product. Such product applied to the soil through spraying or injection provides continuity in the conversion of organic matter into humic substances through the action of such bacteria.

When waste matter of animal origin is treated, it is mixed with waste matter of vegetable origin. Typically, the amount of waste matter of animal origin is on the order of 20% of the total amount to be treated. For example, dairy whey in the amount of 20% by volume may be mixed with wastewater containing vegetable matter. The bacterial count in the product is typically greater than 2.5 billion bacteria per ml. Typically, the carbon content of the humic matter in the product is greater than 30% of the total organic carbon content of the product.

The product according to the invention is obtained from aerobic bacterial proliferation in organic wastewaters containing polyphenolic compounds, such wastewaters derived from the crushing or pressing of vegetable substances, in particular olives, or in such wastewaters possibly mixed and integrated with by-products of animal origin, for example cheese whey or blood. The treatment of the above-mentioned wastewaters with appropriate bacteria in an appropriate environment converts a liquid that causes disposal problems into a valuable fertilizer additive according to the invention.

The bacteria used belong to the group of aerobic autochthonous bacteria, which are of natural origin and normal to said vegetable substances. The use of lyophilized bacteria to initiate the process is not excluded, for example in the treatment of dairy whey. The bacteria may belong, for example, to the family Bacillaceae or Micrococcaceae with the principal aim to inhibit the development of bacteria, viruses, or fungi pathogenic for humans and plants. Most frequently present in the ground and in plants are Bacillaceae, among which is Bacillus subtilis, Lactobacillus and some members of Actinomycete. These and many other aerobic bacteria are part of the autochthonous microflora that is employed to treat organic waste matter from the agricultural and food industries.

The invention also allows agronomic bacteriological restoration of ecosystems, which are frequently altered by species that are not natural to the ecosystems; the introduction or application of the product of the invention containing vital autochthonous bacteria naturally protected by antimetabolites (for example polyphenolic compounds) naturally present in the starting organic substrate causes the humus-forming process to continue in the fields, in purifiers, and in bodies of water due to the activity of the applied ferments, which metabolize organic matter, producing fresh humic acids.

The additive according to the invention, by virtue of its being rich in bacteria of environmental origin, produces selection in the soils, to the detriment of fungi, anaerobic bacteria (for example clostridia) and viruses.

The additive according to the invention, by virtue of its richness in aerobic bacteria that it contains, can be advantageously used in purification plants instead of the expensive lyophilized bacteria that are marketed for this purpose.

The additive, by virtue of its richness in aerobic bacteria, metabolites, and antimetabolites, can be used in the prophylaxis against enterobacteria and pneumobacteria both for human care and in zootechnics, particularly in plants for treating hospital and zootechnical wastewater.

Due to its lack of toxicity, the product of the invention can be atomized and distributed in zootechnical and fish farms as is or acidified, promoting environmental healthfulness to the detriment of pathogenic germs.

It is thus evident that the invention achieves the intended aim and object and in particular there is put into practice a liquid additive for enriching manure and fertilizers in general, such additive being rich in autochthonous bacteria and humic acids of natural origin and production.

A process for producing the product according to the invention will now be described. The process is carried out inside one or more vessels, in a continuous or batch operation, with liquid by-product streams from production processes in the agricultural and food industries or concentrated organic waste streams, for example sewage sludge from civil sewage treatment plants. In one process, one or more centrifugal pumps draws the liquid concentrate from the bottom of the vessel and recirculates it back into the vessels, by way of a fluid distribution network characterized by a central tube of large diameter and small connecting tubes that inject the liquid to the bottom of the vessels. Oxygen in the form of air or also pure oxygen are generally supplied to the process to promote bacterial growth. Such oxygen-containing gas phase is entrained in the recirculating fluid thereby causing oxygenation of the fluid through gas-liquid mixing. Oxygenation generally occurs to a great degree in the distribution tubes.

Another effect of the recirculation is to keep the bacteria from depositing on the bottom and thereby not multiplying. The recirculation furthermore hinders the creation of anaerobic zones in the liquid which would favor instead the development of anaerobic bacterial species.

Inside the vessels, there also may be placed vertical walls designed for promoting fluid flow which would tend to keep the bacteria in suspension.

In the case of wastewaters containing vegetable matter, bacterial species are used which are normal to the substrate. If necessary, it is also possible to use lyophilized bacterial species genetically selected for particular aims.

The temperature of the process should be greater than 5 degrees Centigrade. The process is exothermic as shown by a typical increase in temperature of the liquid during the process of 6 to 12 degrees Centigrade.

The process for converting the waste matter into the product of the invention is improved by the daily addition of organic nitrogen-containing compounds and minerals required for the vital needs of the bacteria. It is also possible, but not necessary, to modify the waste matter to be treated through mixing with other waste matter richer in polysaccharides and simple sugars.

The time required for the conversion of the wastewater stream containing vegetable matter into a product in which 30% of the organic carbon content is contained in humic material is typically about 96 hours. Such time can be lengthened or reduced as a function of the type of wastewater containing vegetable matter which is to be treated and as a function of the characteristics required of the final product.

An interesting characteristic of the product of the invention is that it is stable against fermentation and can be conserved in containers in the absence of air for at least 30 days without one having to rely on chemical, physical or thermal treatments to impede fermentative processes. After application of the product in the ground then, in the presence of air, fermentation continues.

The product of the invention has been successfully tested on plants of various types such as vegetables and fruit trees in a localized way or on a wider scale. For example, a peach tree judged to be at the end of its useful life due to senescence was brought back to a condition of full development and productivity following treatment with the product of the invention. Furthermore, such tree maintains such productivity four years from the time of the treatment.

## Claims

1. Liquid composition obtained by aerobic bacterial proliferation in wastewater containing organic matter, wherein said organic matter contains naturally present polyphenolic compounds and is derived from the crushing or pressing of vegetable substances, said composition containing active aerobic bacterial ferments and humic and fulvic acids, **characterized in that** said aerobic bacteria belong to autochthonous species, present in the amount of greater than 500 million bacteria per ml, which are normal to said vegetable substances and are naturally protected by said polyphenolic compounds, said composition containing said polyphenolic compounds which are present in said organic matter, said composition being capable of inhibiting the growth of pathogenic microorganisms.

2. The composition of Claim 1 wherein said vegetable substances are olives.

3. The composition of Claim 1 further **characterized in that** it contains vitamins of the B group, amino acids, nucleic acids, and essential fatty acids.

4. The composition of Claim 1 wherein said wastewater has been mixed with wastewater of animal origin.

5. The composition of Claim 1 which further comprises adenosine triphosphate.

6. The composition of Claim 1 wherein said bacterial count is greater than 1.5 billion bacteria per ml.

7. The composition of Claim 1 wherein the carbon content of the humic and fulvic acids is greater than 30% of the total organic carbon content.

8. The composition of Claim 1 wherein the aerobic bacteria belong mainly to the families Bacillaceae or Micrococcaceae.

9. A fermentation process for producing the composition of Claim 1 comprising oxygenating wastewater containing organic matter, wherein said organic matter contains naturally present polyphenolic compounds and is derived from the crushing or pressing of vegetable substances, said oxidation being carried out under agitation to promote gas/liquid contacting and suspension of said organic matter throughout the liquid volume, said process being carried out in the presence of aerobic bacteria in the liquid phase, said aerobic bacteria belonging to autochthonous species which are normal to said vegetable substances and are naturally protected by said polyphenolic compounds by which said organic matter is partially converted to humic substances.

10. Use of the composition of any one of Claims 1-8 alone as a fertilizer or in combination with any natural or synthetic fertilizers for treating soils.

11. Use according to Claim 10 wherein said composition is applied by spraying.

12. Use of the composition of any one of Claims 1-8 in atomized form for distribution in zootechnical or fish farms as is or acidified to improve environmental healthfulness to the detriment of pathogenic germs.

13. Use of the composition of any one of Claims 1-8 in the prophylaxis against enterobacteria and pneumobacteria, particularly for treating hospital and zootechnical wastewater.

## Patentansprüche

1. Flüssige Zusammensetzung, erhalten durch aerobes Bakterienwachstum in organische Materie enthaltendem Abwasser, wobei die organische Materie natürlich vorhandene Polyphenolverbindungen enthält und durch Zerdrücken oder Auspressen von pflanzlichen Substanzen gewonnen wird, wobei die Zusammensetzung aktive Fermente aerober Bakterien sowie Humin- und Fulvosäuren enthält,
**dadurch gekennzeichnet, dass**
die aeroben Bakterien zu autochthonen Arten gehören, die in einer Menge von mehr als 500 Millionen Bakterien pro ml vorhanden sind, was für diese pflanzlichen Substanzen normal ist, und durch die Polyphenolverbindungen natürlich geschützt sind; dass die Zusammensetzung die Polyphenolverbindungen enthält, welche in der organischen Materie vorhanden sind; und dass die Zusammensetzung das Wachstum pathogener Mikroorganismen zu hemmen vermag.

2. Zusammensetzung nach Anspruch 1,
bei der die pflanzlichen Substanzen Oliven sind.

3. Zusammensetzung nach Anspruch 1,
die ferner **dadurch gekennzeichnet ist, dass** sie Vitamine der Gruppe B, Aminosäuren, Nukleinsäuren und essenzielle Fettsäuren enthält.

4. Zusammensetzung nach Anspruch 1,
bei der das Abwasser mit Abwasser tierischer Herkunft gemischt worden ist.

5. Zusammensetzung nach Anspruch 1,
die ferner Adenosintriphosphat enthält.

6. Zusammensetzung nach Anspruch 1,
bei der die Bakterienzahl größer als 1,5 Milliarden Bakterien pro ml ist.

7. Zusammensetzung nach Anspruch 1,
bei welcher der Kohlenstoffgehalt der Humin- und Fulvosäuren mehr als 30 % des gesamten organischen Kohlenstoffgehalts ausmacht.

8. Zusammensetzung nach Anspruch 1,
bei der die aeroben Bakterien hauptsächlich zu den Familien Bacillaceae oder Micrococcaceae gehören.

9. Fermentationsverfahren zur Herstellung der Zusammensetzung nach Anspruch 1, welches die Sauerstoffanreicherung von organische Materie enthaltendem Abwasser umfasst, wobei die organische Materie natürlich vorhandene Polyphenolverbindungen enthält und durch Zerdrücken oder Auspressen pflanzlicher Substanzen gewonnen wird, wobei die Sauerstoffanreicherung unter Umrühren erfolgt, um den Kontakt von Gas/Flüssigkeit sowie die Aufschwemmung der organischen Materie in dem gesamten Flüssigkeitsvolumen zu unterstützen, wobei das Verfahren bei Vorhandensein von aeroben Bakterien in der flüssigen Phase erfolgt, wobei diese aeroben Bakterien zu autochthonen Arten gehören, die für diese pflanzlichen Substanzen normal sind und die durch die Polyphenolverbindungen natürlich geschützt sind, durch welche die organische Materie teilweise in Huminstoffe umgewandelt wird.

10. Verwendung der Zusammensetzung nach einem der Ansprüche 1 - 8 allein als Düngemittel oder in Kombination mit beliebigen natürlichen oder synthetischen Düngemitteln zur Behandlung von Böden.

11. Verwendung nach Anspruch 10,
**dadurch gekennzeichnet,**
**dass** die Zusammensetzung durch Sprühen aufgebracht wird.

12. Verwendung der Zusammensetzung nach einem der Ansprüche 1 - 8 in feinstverteilter Form zur Verteilung in zootechnischen oder Fischfarmen in vorliegendem Zustand oder angesäuert, um die Gesundheit der Umgebung zum Nachteil pathogener Keime zu verbessern.

13. Verwendung der Zusammensetzung nach einem der Ansprüche 1 - 8 in der Prophylaxe gegen Enterobakterien und Pneumobakterien, insbesondere zur Behandlung von Krankenhaus- und zootechnischem Abwasser.

## Revendications

1. Composition liquide obtenue par prolifération bactérienne aérobie dans une eau usée contenant de la matière organique, dans laquelle ladite matière organique contient des composés polyphénoliques naturellement présents et provient de l'écrasement ou de la compression de substances végétales, ladite composition contenant des ferments bactériens aérobies actifs et des acides humiques et fulviques, **caractérisée en ce que** lesdites bactéries aérobies appartiennent à des espèces autochtones, présentes à raison de plus de 500 millions de bactéries par ml, qui sont normales pour lesdites substances végétales et qui sont naturellement protégées par lesdits composés polyphénoliques, ladite composition contenant lesdits composés polyphénoliques qui sont présents dans lesdites matières organiques, ladite composition étant capable d'inhiber la croissance de microorganismes pathogènes.

2. Composition selon la revendication 1 dans laquelle lesdites substances végétales sont des olives.

3. Composition selon la revendication 1 **caractérisée en outre en ce qu'**elle contient des vitamines du groupe B, des acides aminés, des acides nucléiques et des acides gras essentiels.

4. Composition selon la revendication 1 dans laquelle ladite eau usée a été mélangée avec une eau usée d'origine animale.

5. Composition selon la revendication 1 qui comprend en outre de l'adénosine triphosphate.

6. Composition selon la revendication 1 dans laquelle ladite numération bactérienne est supérieure à 1,5 milliard de bactéries par ml.

7. Composition selon la revendication 1 dans laquelle la teneur en carbone des acides humiques et fulviques est supérieure à 30% de la teneur totale en carbone organique.

8. Composition selon la revendication 1 dans laquelle les bactéries aérobies appartiennent principalement aux familles des bacillacées ou des micrococcacées.

9. Procédé de fermentation pour produire la composition de la revendication 1 comprenant l'oxygénation d'une eau usée contenant de la matière organique, dans lequel ladite matière organique contient des composés polyphénoliques naturellement présents et provient de l'écrasement ou de la compression de substances végétales, ladite oxydation étant réalisée sous agitation pour promouvoir le contact gaz/liquide et la mise en suspension de ladite matière organique dans tout le volume du liquide, ledit procédé étant réalisé en présence de bactéries aérobies dans la phase liquide, lesdites bactéries aérobies appartenant à des espèces autochtones qui sont normales pour lesdites substances végétales et qui sont naturellement protégées par lesdits composés polyphénoliques par lesquels ladite matière organique est partiellement transformée en substances humiques.

10. Utilisation de la composition selon l'une quelconque des revendications 1 - 8 seule comme engrais ou en association avec des engrais naturels ou synthétiques quelconques pour traiter les sols.

11. Utilisation selon la revendication 10 dans laquelle ladite composition est appliquée par pulvérisation.

12. Utilisation de la composition selon l'une quelconque des revendications 1 - 8 sous forme atomisée à distribuer dans des fermes zootechniques ou piscicoles telle quelle ou acidifiée pour améliorer la salubrité de l'environnement au détriment des germes pathogènes.

13. Utilisation de la composition selon l'une quelconque des revendications 1 - 8 dans la prophylaxie contre les entérobactéries et les pneumobactéries, en particulier pour le traitement des eaux usées hospitalières et zootechniques.
